# EUROPEAN PATENT APPLICATION

(11) **EP 1 930 713 A1**
(43) Date of publication of application: **11.06.2008**
(21) Application number: 06780624.0
(22) Date of filing: 20.06.2006
(51) Int. Cl.: G01N 15/14, G01N 15/06

(54) **FINE PARTICLE COUNTER**

(30) Priority: 22.07.2005 JP 2005212784
(71) Applicant: Riken, Wako-shi, Saitama 351-0198 (JP)
(72) Inventor: TAKEUCHI, Kazuo, Wako-shi, Saitama 351-0198 (JP); OKUYAMA, Kikuo, Wako-shi, Saitama 351-0198 (JP); YABUMOTO, Junsuke, Wako-shi, Saitama 351-0198 (JP); ITO, Minekazu, Wako-shi, Saitama 351-0198 (JP)
(74) Representative: Liesegang, Eva
(86) International application number: PCT/JP2006/312337
(87) International publication number: WO 2007/010698

(57) **Abstract**

The present invention provides a fine-particle counter with which the number density of nanometer-sized fine particles born in a gas phase, which is extremely low, can be accurately measured under wide-ranging pressure conditions from pressurized conditions to low-pressure conditions.

After contact-mixing, in a mixer 3, saturated vapor of a high-boiling-point solvent produced in a saturator 2, a component of a condensed nucleus detector 1, with nanometer-sized fine gas-born particles, condensed droplets of the saturated vapor whose nuclii are the fine particles are produced in a condenser 4 by heterogeneous nucleation. The number of the condensed droplets per unit of time is then counted with an optical detector 5 and is output as a pulse signal, and a computer 19 computes the number density of the nanometer-sized fine particles born in the aerosol from this pulse signal, the gas flow rates controlled by the flow meters 6, 12 and 10, and the other data that are transmitted to the computer 19 via an interface 18. The internal space of the mixer 3 has a narrowest passage having a circular cross section, situated in the center between the lower end of the mixer from which the carrier gas enters and the upper end of the mixer from which the carrier gas exits, a truncated-cone-shaped part whose cross section is circular and whose diameter gradually decreases so that the diameter on the lower end side is greater than the diameter on the narrowest passage side, and a reverse-truncated-cone-shaped part whose cross section is circular and whose diameter gradually increases so that the diameter on the narrowest passage side is smaller than the diameter on the upper end side. An aerosol inlet communicating with the aerosol inlet tube 8 is positioned at the narrowest passage.

## Description

### BACKGROUND OF THE INVENTION

### Field of the Invention

The present invention relates to a fine-particle counter for measuring the number density (the number per unit of volume) of nanometer-sized fine particles born in a gas phase, and particularly to a fine-particle counter for determining, under wide-ranging pressure conditions from pressurized conditions to low-pressure conditions, the number density of fine particles by detecting and counting condensed droplets produced by heterogeneous nucleation using the fine particles as nuclii.

### Background Art

In areas such as the process of semiconductor production, there has recently been a demand for development of a technique for determining with high accuracy the number density of nanometer-sized fine particles born in a gas phase. Specifically, as for such nanometer-sized fine particles as those born in a gas phase that should be extremely clean, such as an environment for the process of semiconductor production, a clean room environment, or a high-purity gas for industrial or laboratory use, and those produced in an environment when depositing a thin film by chemical vapor deposition (CVD), the need of development of a technique for accurately determining the number density of the fine particles is felt.

In particular, in such processes as the process of semiconductor production and that of thin-film deposition using CVD or the like, if fine particles born in an environment stick to the surfaces of semiconductors or thin films, the final products are defective. It is also pointed out that when the number of born fine particles is greater, the yields of products are lower. For this reason, in such areas as the process of semiconductor production and that of thin-film deposition, energy has been thrown into the development of a technique for enhancing the cleanness of an environment. Further, in order to confirm precisely the effectiveness of introduction of a technique developed to make an environment cleaner, a technique for counting fine particles that can be used under wide-ranging operating pressure conditions from pressurized conditions to low-pressure conditions is desired.

By a conventional technique for counting fine particles, however, it has been difficult to determine quantitatively the number density of fine particles born in a gas phase under pressurized or low-pressure conditions in a short time. It has therefore been impossible to confirm precisely the effectiveness of introduction of a technique developed to make an environment cleaner.

Chief examples of conventional fine-particle counting techniques for measuring the number density of nanometer-sized fine particles born in a gas phase are a technique using a Faraday cup electrometer, and a technique using a fine-particle counter such as a condensed nucleation counter. Of these, a technique using a Faraday cup electrometer is as follows: radiation such as alpha ray, or corona ion is first applied to fine particles to make them into the state of bipolar equilibrium charging (charged fine particles); a very weak electric current produced when the electric charge is released from the charged fine particles is measured; and from the electric current measured, the number density of the charged fine particles is determined by calculation (see Patent Documents 1 and 2). And a technique using a fine-particle counter such as a condensed nucleation counter is as follows: after mixing fine particles with saturated vapor of a volatile organic solvent such as alcohol and making them grow to condensed droplets in the submicron range by heterogeneous nucleation, the condensed droplets are detected by an optical method such as a light scattering or transmitting method to determine the number density of the fine particles (see Patent Documents 3, 4 and 5).

However, the number density per unit of volume of nanometer-sized fine particles born in a gas phase, such as an environment for the process of semiconductor production, a clean room environment, or a high-purity gas for industrial or laboratory use, should be extremely low, and even dusts in a size of 0.1 µm are not permissible in the process of LSI production, for example. Moreover, the definition of "Cleanness Class 1", the highest level of cleanness specified in the Standard for Controlling Fine Particles in Gas, is that the number density of fine particles in sizes of 0.1 to 0.3 µm is 13 particles/m³ or less, and even the number density of the fine particles that falls under "Cleanness Class 8" is as extremely low as 1.36 × 10⁷ particles/m³ (= 1.36 particles/cm³).

Of the above-described conventional techniques for counting fine particles, the technique using a Faraday cup electrometer has a lower limit of detection that corresponds to a case where about 10,000 monovalent charged particles flow in one minute at 1fA (= 10⁻¹⁵ A), so that even fine particles whose number density falls under the above "Cleanness Class 8" cannot be counted with this technique. In the case of the technique using a fine-particle counter such as a condensed nucleation counter, although the number density of fine particles can be measured even when only one particle is present in 1 cm³, the operating pressure is limited only to the atmospheric pressure (101.3 kPa). Such a technique is at a disadvantage in that the number density of fine particles cannot be measured under pressurized conditions (at a pressure of 133.3 kPa in processing automobile exhaust gas, etc.) or low-pressure conditions (at a low pressure of 1.33 kPa in the process of semiconductor production or that of thin-film deposition such as CVD) that are used in a variety of processes.

Non-Patent Document 1 reports a mixing-type condensed nucleation counter with which the number density of nanometer-sized fine particles born in a gas phase can be measured even under low-pressure conditions. The minimum operating pressure and the maximum operating pressure of this condensed nucleation counter, however, are 8.7 kPa and 101.3 kPa (atmospheric pressure), respectively, so that even with this counter, it is difficult to measure the number density of fine particles under wide-ranging pressure conditions.
Patent Document 1: Japanese Laid-Open Patent Publication No. 2722/2000
Patent Document 2: Japanese Laid-Open Patent Publication No. 228076/2001
Patent Document 3: Japanese Laid-Open Patent Publication No. 76935/1986
Patent Document 4: Japanese Patent Publication No. 33994/1995
Patent Document 5: Japanese Patent Publication No. 104259/1995
Non-Patent Document 1: Chan Soo Kim, et al.: "Performance of a mixing-type CNC for nanoparticles at low-pressure conditions", Journal of Aerosol Science, Vol. 33, p.p. 1389-1404 (2002).

### SUMMARY OF THE INVENTION

### Problems to be solved by the Invention

In the light of the aforementioned drawbacks in the prior art, the present invention was accomplished. An object of the present invention is to provide a fine-particle counter with which the number density of nanometer-sized fine particles (in the order of 1 nm, for example) born in a gas phase, which is extremely low, can be accurately measured under wide-ranging pressure conditions from pressurized conditions to low-pressure conditions (e.g., under pressure conditions ranging from 133.3 kPa to 13.3 kPa).

### Means for Solving the Problems

The present invention provides a fine-particle counter for determining the number density of fine particles born in a gas phase, comprising a saturator for heating a high-boiling-point solvent to produce saturated vapor of the high-boiling-point solvent, a mixer for mixing the saturated vapor of the high-boiling-point solvent produced by the saturator with nanometer-sized fine gas-born particles introduced into the mixer via an aerosol inlet tube, a condenser for forming, by heterogeneous nucleation, condensed droplets whose nuclii are the fine particles mixed by the mixer, and an optical detector for counting, by an optical method, the number of the condensed droplets formed by the condenser, a carrier gas supply pipe for supplying a carrier gas being connected to the saturator, an excess gas discharge pipe through which the carrier gas to be discharged along with the condensed droplets is discharged being connected to the optical detector, each one of the saturator, the mixer, the condenser and the optical detector having an internal space through which the carrier gas, which is supplied via the carrier gas supply pipe connected to the saturator and is discharged via the excess gas discharge pipe connected to the optical detector, passes together with the saturated vapor, with the fine particles, or with the condensed droplets, the internal space of the mixer having a narrowest passage having a circular cross section, situated in the center between one end of the mixer from which the carrier gas enters and the other end of the mixer from which the carrier gas exits, a truncated-cone-shaped part whose cross section is circular and whose diameter gradually decreases so that the diameter on the one end side is greater than the diameter on the narrowest passage side, and a reverse-truncated-cone-shaped part whose cross section is circular and whose diameter gradually increases so that the diameter on the narrowest passage side is smaller than the diameter on the other end side, an aerosol inlet communicating with the aerosol inlet tube being positioned at the narrowest passage.

In the present invention, it is preferred that the internal space of the mixer further have an annular passage surrounding the outer periphery of the narrowest passage having a circular cross section, and that the aerosol inlet be positioned at the annular passage so that the aerosol is introduced into the internal space of the mixer along the tangent line to the annular passage.

Further, in the present invention, it is preferred that the optical detector have a holder composed of a laser layer formation chamber, an internal space, in which a thin layer of laser beam is formed so that the thin layer of laser beam blocks the flow of the condensed droplets introduced into the optical detector from the condenser together with the carrier gas, and a nozzle through which the condensed droplets are introduced into the laser layer formation chamber together with the carrier gas, and a curtain gas supply pipe through which a curtain gas is supplied to the laser layer formation chamber in the holder, and that an annular curtain-gas-forming nozzle communicating with the curtain gas supply pipe be situated in the vicinity of the outer periphery of the nozzle in the holder so that the curtain gas introduced into the laser layer formation chamber via the curtain gas supply pipe and the curtain-gas-forming nozzle prevents the condensed droplets introduced from the nozzle from dispersing in a lateral direction relative to the direction of their flow.

Furthermore, it is preferred that the present invention further comprise a drain discharge pipe for returning, to the saturator, the condensate of the high-boiling-point solvent produced in the condenser.

Furthermore, in the present invention, it is preferred that the internal space of the condenser have a truncated-cone-shaped part whose cross section is circular and whose diameter gradually decreases so that the diameter at one end of the condenser from which the carrier gas enters is greater than the diameter at the other end of the condenser from which the carrier gas exits.

Furthermore, it is preferred that the present invention further comprise a carrier gas flow meter placed in the carrier gas supply pipe, an excess gas flow meter placed in the excess gas discharge pipe, and a computer for computing the number density of the nanometer-sized fine gas-born particles from the data from the carrier gas flow meter and the excess gas flow meter and from a pulse signal showing the number of the condensed droplets counted with the optical detector. It is preferred that the present invention further comprise a gas discharging mechanism for discharging the excess gas via the excess gas discharge pipe, a pressure sensor placed in a pressure-measuring tube communicating with the internal space of the condenser, and a pressure regulator/indicator for regulating and indicating the internal pressure of the condenser measured with the pressure sensor, and that the computer analyze the data from the carrier gas flow meter and the excess gas flow meter, as well as the data from the pressure regulator/indicator, and control the gas discharging mechanism according to the data analyzed.

### Effects of the Invention

According to the present invention, after contact-mixing, in the mixer, saturated vapor of a high-boiling-point solvent produced in the saturator, a component of the condensed nucleus detector, with nanometer-sized fine gas-born particles, condensed droplets of the saturated vapor whose nuclii are the fine particles are produced in the condenser by heterogeneous nucleation, and the number of the condensed droplets per unit of time is counted with the optical detector, thereby determining the number density of the nanometer-sized fine gas-born particles. The number density of nanometer-sized fine particles born in a gas phase can thus be accurately measured under wide-ranging pressure conditions from pressurized conditions to low-pressure conditions (under pressure conditions ranging from 133.3 to 1.33 kPa).

Particularly, according to the present invention, the internal space of the mixer on the entry side is a truncated-core-shaped part whose cross section is circular and whose diameter gradually decreases so that the diameter on the lower end side is greater than the diameter on the narrowest passage side, and the internal space of the mixer above the narrowest passage (the part on the exit side) is a reverse-truncated-cone-shaped part whose cross section is circular and whose diameter gradually increases so that the diameter on the narrowest passage side is smaller than the diameter on the upper end side. Therefore, the efficiency of contact mixing of the saturated vapor of the high-boiling-point solvent with the fine gas-born particles improves. Consequently, it becomes possible to attain reduction in losses because of the acceleration of heterogeneous nucleation and stabilization of the background because of the suppression of homogeneous nucleation, which lead to a great improvement in accuracy in measurement. Further, a curtain gas is introduced into the laser layer formation chamber from the annular curtain-gas-forming nozzle surrounding the outer periphery of the nozzle in the holder, so that the condensed droplets introduced from the nozzle do not disperse in a lateral direction relative to the direction of their flow. Since the condensed droplets introduced from the nozzle are thus prevented from diffusing, not only accuracy in measurement improves, but also the loss of the condensed droplets decreases.

### BRIEF DESCRIPTION OF THE DRAWINGS

Fig. 1 is a view showing the whole structure of a fine-particle counter according to an embodiment of the present invention.
Fig. 2 is a longitudinal sectional view showing the details of a saturator included in a condensed nucleus detector in the fine-particle counter shown in Fig. 1.
Fig. 3A is a longitudinal sectional view showing the details of an example of a mixer included in the condensed nucleus detector in the fine-particle counter shown in Fig. 1.
Fig. 3B is a sectional view taken along line IIIB-IIIB of the mixer shown in Fig. 3A.
Fig. 4 is a longitudinal sectional view showing the details of a condenser included in the condensed nucleus detector in the fine-particle counter shown in Fig. 1.
Fig. 5 is a longitudinal sectional view showing the details of an optical detector included in the condensed nucleus detector in the fine-particle counter shown in Fig. 1.
Fig. 6A is a longitudinal sectional view showing the details of another example of a mixer included in the condensed nucleus detector in the fine-particle counter shown in Fig. 1.
Fig. 6B is a sectional view taken along line VIB-VIB of the mixer shown in Fig. 6A.

### EMBODIMENT FOR CARRYING OUT THE INVENTION

With reference to the accompanying drawings, an embodiment of the present invention will be described hereinafter.

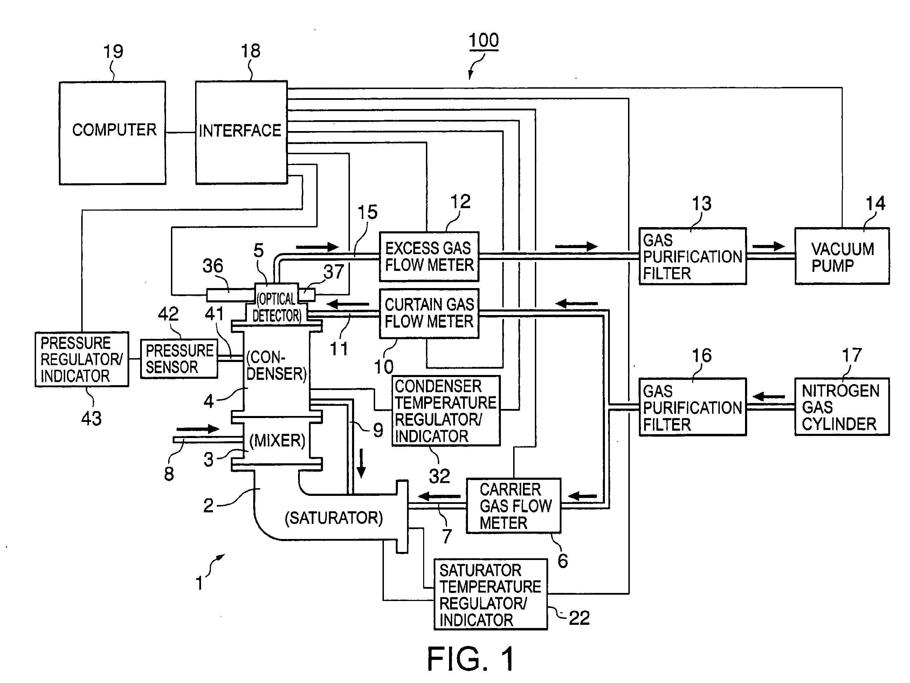

The whole structure of a fine-particle counter according to an embodiment of the present invention will be first described with reference to Fig. 1.

A fine-particle counter 100 according to this embodiment is for measuring the number density of fine particles born in a gas phase, and, as shown in Fig. 1, it comprises a saturator 2 for heating a high-boiling-point solvent to produce saturated vapor of the high-boiling-point solvent, a mixer 3 for mixing the saturated vapor of the high-boiling-point solvent produced by the saturator 2 with nanometer-sized fine gas-born particles introduced into the mixer 3 via an aerosol inlet tube 8, a condenser 4 for forming, by heterogeneous nucleation, condensed droplets in the submicron range whose nuclii are the fine particles mixed by the mixer 3, and an optical detector 5 for counting, by an optical method, the number of the condensed droplets formed by the condenser 4 and outputting it as a pulse signal.

The saturator 2, the mixer 3, the condenser 4, and the optical detector 5 are joined together by bolts or clamps, or by weld or the like, and, at the same time, are kept airtight by the use of sealants, gaskets or the like, thereby constituting a condensed nucleus detector 1 as a whole.

To the saturator 2 is connected a carrier gas supply pipe 7 for supplying a carrier gas. To the optical detector 5 is connected an excess gas discharge pipe 15 through which the carrier gas to be discharged together with the condensed droplets is discharged. To the optical detector 5 is connected a curtain gas supply pipe 11 for supplying a curtain gas. Between the condenser 4 and the saturator 2 is placed a drain discharge pipe 9 for returning, to the saturator 2, the condensate of the high-boiling-point solvent produced in the condenser 4. Each one of the saturator 2, the mixer 3, the condenser 4, and the optical detector 5 has an internal space through which the carrier gas, which is supplied via the carrier gas supply pipe 7 connected to the saturator 2 and is discharged via the excess gas discharge pipe 15 connected to the optical detector 5, passes together with the saturated vapor, with the fine particles, or with the condensed droplets.

The saturator 2, the mixer 3, the condenser 4, and the optical detector 5 that are included in the condensed nucleus detector 1, a main component of the fine-particle counter 100 shown in Fig. 1, will be hereinafter described in detail.

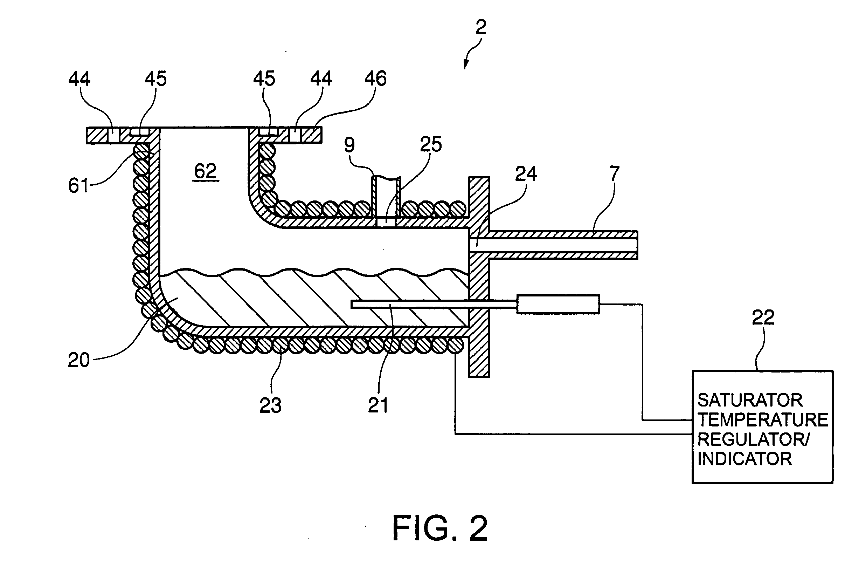

First, the saturator 2 will be described in detail with reference to Fig. 2.

The saturator 2 has a container 61 having a rectangular L-shaped internal space 62 whose cross section is circular, as shown in Fig. 2. Such a high-boiling-point solvent 20 as a PAO (polyalpha olefin) is contained in the internal space 62 of the container 61. The container 61 is not restricted to be rectangular L-shaped, and it may be in any other shape such as a cylinder.

One end of the container 61 is closed and the other end (the end on the mixer 3 side) open.

The one end of the container 61, which is closed, has a carrier gas supply hole 24 communicating with the carrier gas supply pipe 7 and is provided with a temperature sensor 21 for measuring the temperature of the high-boiling-point solvent contained in the internal space 62 of the container 61. To the temperature sensor 21 is connected a saturator temperature regulator/indicator 22.

Around the outer surface of the sidewall of the container 61 is wound a heating mechanism 23 (a 400-W sheathed heater with a diameter of 2.3 mm and a length of 3 m) connected to the saturator temperature regulator/indicator 22, so that the high-boiling-point solvent 20 contained in the internal space 62 of the container 61 can be heated to a specified temperature to be saturated vapor. The sidewall of the container 61 has a drain outlet 25 communicating with a drain discharge pipe 9.

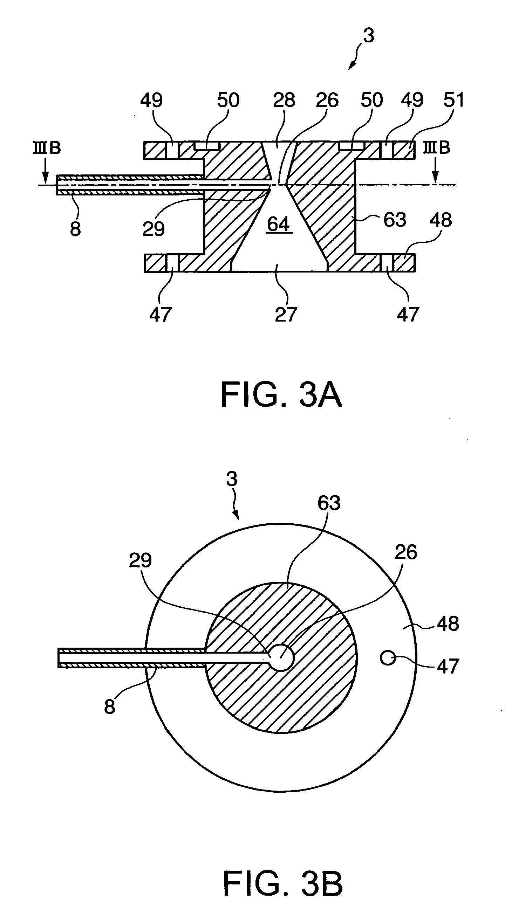

A flange 46 having bolt holes 44 and an O ring groove 45 is provided on the other end (upper end) of the container 61. The flange 46 and a flange 48 provided on the lower end of the mixer 3 (see Figs. 3A and 3B) can be joined together by bolts, and, moreover, the container 61 can be kept airtight by means of an O ring.

Next, the mixer 3 will be described in detail with reference to Figs. 3A and 3B.

As Figs. 3A and 3B show, the mixer 3 has a container 63 having an internal space 64 whose cross section is circular.

The internal space 64 of the container 63 is composed of a narrowest passage 26 having a circular cross section, situated in the center between the lower end (one end) of the container 63 from which the carrier gas enters and the upper end (other end) of the container 63 from which the carrier gas exits, a truncated-cone-shaped, diameter-decreasing part 27 whose cross section is circular and whose diameter gradually decreases so that the diameter on the lower end side is greater than the diameter on the narrowest passage 26 side, and a reverse-truncated-cone-shaped, diameter-increasing part 28 whose cross section is circular and whose diameter gradually increases so that the diameter on the narrowest passage 26 side is smaller than the diameter on the upper end side. An aerosol inlet 29 communicating with the aerosol inlet tube 8 is positioned at the narrowest passage 26.

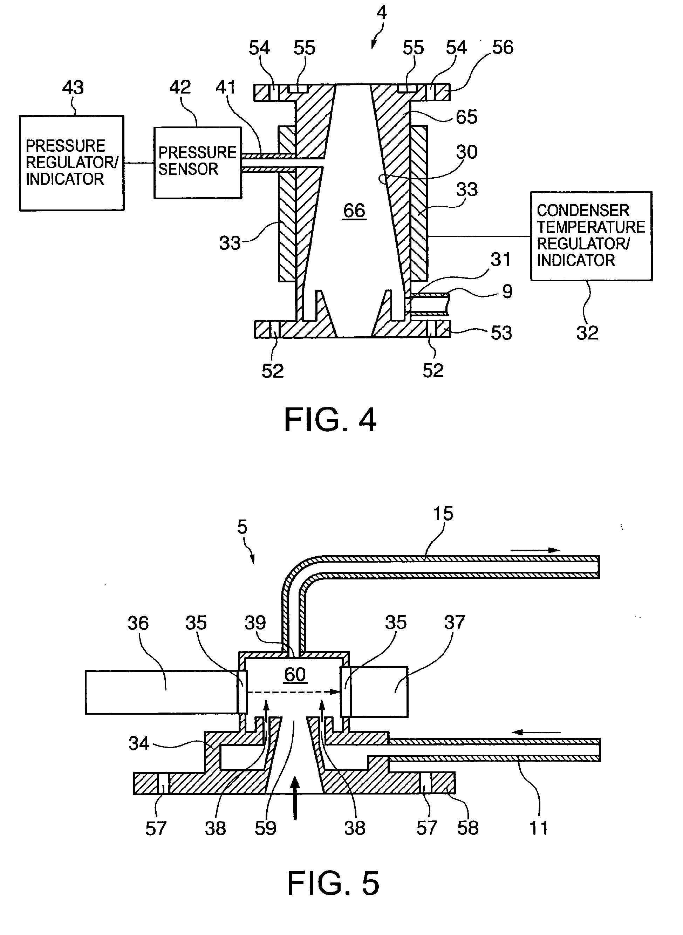

A flange 48 having bolt holes 47 is provided on the lower end of the container 63. The flange 48 and the flange 46 provided on the upper end of the saturator 2 (see Fig. 2) can be joined together by bolts. Furthermore, a flange 51 having bolt holes 49 and an O ring groove 50 is provided on the upper end of the container 63. The flange 51 and a flange 53 provided on the lower end of the condenser 4 (see Fig. 4) can be joined together by bolts, and, moreover, the container 63 can be kept airtight by means of an O ring.

Next, the condenser 4 will be described in detail with reference to Fig. 4.

As Fig. 4 shows, the condenser 4 has a container 65 having an internal space 66 whose cross section is circular.

The internal space 66 of the container 65 is composed of a truncated-cone-shaped, diameter-decreasing part 30 whose cross section is circular and whose diameter gradually decreases so that the diameter at the lower end (one end) of the container 65 from which the carrier gas enters is greater than the diameter at the upper end (other end) of the container 65 from which the carrier gas exits.

A heating mechanism 33 (a 75-W sheet heater with a width of 4 cm and a length of 8.5 cm) connected to a condenser temperature regulator/indicator 32 is stuck on the outer surface of the sidewall of the container 65, so that a gas (including the condensed droplets) flowing in the internal space 66 of the container 65 can be heated to a specified temperature. The container 65 has, in the lower part of its sidewall, a drain discharge hole 31 communicating with the drain discharge pipe 9. Further, a pressure-measuring tube 41 communicating with the internal space 66 is attached to the center of the sidewall of the container 65. The pressure-measuring tube 41 is provided with a pressure sensor 42, and to the pressure sensor 42 is connected a pressure regulator/indicator 43 for regulating and indicating the internal pressure of the condenser 4 measured with the pressure sensor 42.

A flange 53 having bolt holes 52 is provided on the lower end of the container 65. The flange 53 and the flange 51 provided on the upper end of the mixer 3 (see Figs. 3A and 3B) can be joined together by bolts. Furthermore, a flange 56 having bolt holes 54 and an O ring groove 55 is provided on the upper end of the container 65. The flange 56 and a flange 58 provided on the lower end of the optical detector 5 (see Fig. 5) can be joined together by bolts, and, moreover, the container 65 can be kept airtight by means of an O ring.

Next, the optical detector 5 will be described in detail with reference to Fig. 5.

As Fig. 5 shows, the optical detector 5 has a holder 34 composed of a laser layer formation chamber (internal space) 60 having a circular cross section and a nozzle 59. The laser layer formation chamber 60 is a part occupying the upper half of the internal space of the holder 34, in which a thin layer of laser beam is formed so that the thin layer of laser beam blocks the flow of the condensed droplets introduced together with the carrier gas into the laser layer formation chamber 60 from the condenser 4 via the nozzle 59. The nozzle 59 is a truncated-cone-shaped part crossing the central axis, occupying the lower half of the internal space of the holder 34, and is for introducing the condensed droplets into the laser layer formation chamber 60 together with the carrier gas.

The upper end of the holder 34 is closed, and the lower end (the end on the mixer 4 side) is opened.

The upper end of the holder 34, which is closed, has an excess gas discharge hole 39 communicating with the excess gas discharge pipe 15. The excess gas discharge hole 39 is situated at the top of the laser layer formation chamber 60.

To circular shield glass windows 35 mounted in upper parts of the sidewall of the holder 34, a laser diode 36 and a light receiving diode 37 are attached so that they are aligned on one optical axis of the laser layer formation chamber 60 to face each other. Preferably, the inner and outer surfaces of the holder 34 are coated with non-reflecting black paint so that the holder 34 is shielded from light, and, moreover, the inner surface of the holder 34 is treated so that it absorbs stray light.

In the vicinity of the outer periphery of the nozzle 59, the holder 34 has an annular curtain-gas-forming nozzle 38 communicating with the curtain gas supply pipe 11. A curtain gas introduced into the laser layer formation chamber 60 via the curtain gas supply pipe 11 and the curtain-gas-forming nozzle 38 prevents the condensed droplets introduced from the nozzle 59 from dispersing in a lateral direction relative to the direction of their flow. For the curtain-gas-forming nozzle 38, a nozzle having an annular jet with a width of 0.5 mm can be used, for example. The curtain gas supply pipe 11 is for feeding a curtain gas to the laser layer formation chamber 60 in the holder 34.

Furthermore, a flange 58 having bolt holes 57 is provided on the lower end of the holder 34. The flange 58 and the flange 56 provided on the upper end of the condenser 4 (see Fig. 4) can be joined together by bolts.

Returning now to Fig. 1, in the condensed nucleus detector 1 having the above-described structure, a carrier gas flow meter 6 for measuring and controlling the flow rate of a carrier gas is placed in the carrier gas supply pipe 7 connected to the saturator 2. A curtain gas flow meter 10 for measuring and controlling the flow rate of a curtain gas is placed in the curtain gas supply pipe 11 connected to the optical detector 5. A gas from a nitrogen gas cylinder (gas supplying mechanism) 17 is purified by passing it through a gas purification filter 16 and is then sent to the carrier gas supply pipe 7 and the curtain gas supply pipe 11. On the other hand, an excess gas flow meter 12 for measuring and controlling the flow rate of an excess gas is placed in the excess gas discharge pipe 15 connected to the optical detector 5. A gas to be discharged via the excess gas discharge pipe 11 is purified with a gas purification filter 13 and is then discharged to a vacuum pump 14 (gas discharging mechanism).

Since the saturator temperature regulator/indicator 22 is, as described above, connected to the saturator 2, the temperature of the high-boiling-point solvent contained in the saturator 2 can be regulated and indicated. On the other hand, the condenser temperature regulator/indicator 32 is connected to the condenser 4, as mentioned above, so that the temperature of the gas existing inside the condenser 4 can be regulated and indicated.

Further, the condenser 4 is provided with the pressure sensor 42 fixed to the pressure-measuring tube communicating with the internal space of the condenser 4, and also with the pressure regulator/indicator 43 for regulating and indicating the internal pressure of the condenser 4 measured with the pressure sensor 42, as mentioned above.

The laser diode 36 for projecting laser beam and the light receiving diode 37 for receiving the laser beam are connected to the optical detector 5 as optical devices for counting, by an optical method, the number of the condensed droplets produced by the condenser 4, as mentioned above.

An interface 18 and a computer 19 are connected to the above-described various flow meters (the carrier gas flow meter 6, the excess gas flow meter 12, and the curtain gas flow meter 10), various temperature regulators/indicators (the saturator temperature regulator/indicator 22, and the condenser temperature regulator/indicator 32), pressure regulator/indicator (the pressure regulator/indicator 43), optical devices (the laser diode 36 and the light receiving diode 37), and gas discharging mechanism (the vacuum pump 14). Every part of the fine-particle counter is thus under the real-time control of the computer 19, and the computer 19 can read and analyze the data from the respective parts of the fine-particle counter. Specifically, for example, the computer 19 can compute the number density of the nanometer-sized fine particles born in the aerosol from the data from the carrier gas flow meter 6 and the excess gas flow meter 12 (the flow rates of the carrier gas), from the flow rate of the aerosol introduced into the mixer 3 via the aerosol inlet tube 8, and from the pulse signal showing the number of the condensed droplets counted with the light receiving diode 37 in the optical detector 5. Further, the computer 19 can analyze the data from the carrier gas flow meter 6 and the excess gas flow meter 12, as well as the data from the pressure regulator/indicator 43, and control the vacuum pump 14 according to the data analyzed.

In the aforementioned fine-particle counter 100, those pipes that connect the devices and through which gases, fine particles, etc. flow (the aerosol inlet tube 8, the carrier gas supply pipe 7, the excess gas discharge pipe 15, the curtain gas supply pipe 11, the drain discharge pipe 9, and the pressure-measuring tube 41, etc.) are preferably stainless steel pipes or chemical- and temperature-resistant resin pipes. Further, the wire connections that connect the devices and through which data or electrical signals such as pulse signals are transmitted are preferably input/output signal conductors (cables).

The action of this embodiment having the aforementioned structure will now be described.

In the fine-particle counter 100 shown in Figs. 1 to 5, a high-boiling-point solvent 20 contained in the internal space 62 of the container 61 of the saturator 2, a component of the condensed nucleus detector 1, is heated to a specified temperature to be saturated vapor by the heating mechanism 23 whose temperature is regulated by the saturator temperature regulator/indicator 22. In this step, a carrier gas fed from the nitrogen gas cylinder 17, purified with the gas purification filter 16, is introduced, from the carrier gas supply hole 24 in one end of the container 61 of the saturator 2, into the container 61 of the saturator 2 after its flow rate has been controlled to a specified value by the carrier gas flow meter 6, and is then feed to the mixer 3 from the opening in the upper end of the container 61 of the saturator 2, together with the saturated vapor of the high-boiling-point solvent 20 produced in the internal space 62 of the container 61.

On the other hand, aerosol containing fine particles, an object of measurement, passes through the aerosol inlet tube 8 attached to the mixer 3 and enters into the internal space 64 of the container 63 of the mixer 3 from the aerosol inlet 29 situated at the narrowest passage 26 in the internal space 64. The aerosol is thus brought into contact with and mixed with the saturated vapor of the high-boiling-point solvent fed from the saturator 2 together with the carrier gas (gas mixture). In this step, the aerosol fed via the aerosol inlet tube 8 and the aerosol inlet 29 enters into the internal space 64 linearly relative to the narrowest passage 26 and strikes the opposite wall of the narrowest passage 26. It is therefore possible to avoid such troubles as losses that are caused because the fine particles born in the aerosol stick to the opposite wall.

The entry-side part of the internal space 64 of the container 63 of the mixer 3 is the truncated-cone-shaped, diameter-decreasing part 27 whose cross section is circular and whose diameter gradually decreases so that the diameter on the lower end side is greater than the diameter on the narrowest passage 26 side. Therefore, as the saturated vapor of the high-boiling-point solvent (gas mixture) and the aerosol move upward, their flow rates increase because the cross section of the space decreases, and peak at the narrowest passage 26, so that the efficiency of contact mixing of the saturated vapor of the high-boiling-point solvent with the fine particles contained in the aerosol improves. On the other hand, the part above the narrowest passage 26 (the part on the exit side) is the reverse-truncated-cone-shaped, diameter-increasing part 28 whose cross section is circular and whose diameter gradually increases so that the diameter on the narrowest passage 26 side is smaller than the diameter on the upper end side. Therefore, as the saturated vapor of the high-boiling-point solvent (gas mixture) and the aerosol move upward, their flow rates decrease because the cross section of the space increases, so that the contact mixing of the saturated vapor of the high-boiling-point solvent with the fine particles contained in the aerosol accelerates.

The gas mixture and the aerosol that have reached the opening in the upper end of the container 63 of the mixer 3 are introduced into the internal space 66 of the container 65 of the condenser 4 from the opening in the lower end of the container 65 and further move upward. Therefore, the saturated vapor of the high-boiling-point solvent and the fine particles contained in the aerosol repeatedly collide with each other to cause heterogeneous nucleation, and condensed droplets in the submicron range whose nuclii are the fine particles are produced.

The internal space 66 of the container 65 of the condenser 4 is composed of the truncated-cone-shaped, diameter-decreasing part 30 whose cross section is circular and whose diameter gradually decreases so that the diameter on the lower end side is greater than the diameter on the upper end side. Therefore, as the saturated vapor of the high-boiling-point solvent (gas mixture) and the aerosol move upward, the density of the fine particles in the mixture of the saturated vapor of the high-boiling-point solvent and the aerosol increases, and the growth of the condensed droplets produced by heterogeneous nucleation accelerates.

Further, by heating to a specified temperature the condensed droplets carried together with the carrier gas, by the use of the heating mechanism 33 stuck on the outer surface of the sidewall of the container 65 of the condenser 4 and the condenser temperature regulator/indicator 32, it is possible to accelerate the growth of the condensed droplets produced by heterogeneous nucleation in which the fine particles serve as nuclii, and, at the same time, suppress the production of condensed droplets by homogeneous nucleation in which the fine particles do not serve as nuclii.

The saturated vapor of the high-boiling-point solvent that has come into contact with the inner surface of the sidewall of the container 65 of the condenser 4 and liquefied is returned to the saturator 2 via the drain discharge hole 31 in the lower part of the sidewall of the container 65 of the condenser 4 and the drain outlet pipe 9. Thus, the liquefied saturated vapor of the high-boiling-point solvent flows down to the narrowest passage 26 in the internal space 64 of the container 63 of the mixer 3 and can prevent the contact mixing of the saturated vapor of the high-boiling-point solvent coming up from the lower part of the internal space 64 of the mixer 3 with the fine particles contained in the aerosol from being impeded.

Thereafter, the condensed droplets that have grown, in the condenser 4, to sizes in the submicron range are introduced into the optical detector 5 and are jetted into the laser layer formation chamber 60 from the truncated-cone-shaped nozzle 59 situated in the holder 34 in the optical detector 5. They then pass through a thin layer of laser beam formed by the laser diode 36.

In this step, since a curtain gas supplied via the curtain gas supply pipe 11 is introduced into the laser layer formation chamber 60 from the annular curtain-gas-forming nozzle 38 surrounding the outer periphery of the nozzle 59 in the holder 34 in the optical detector 5, the condensed droplets introduced from the nozzle 59 do not disperse in a lateral direction relative to the direction of their flow. The condensed droplets introduced from the nozzle 59 are thus prevented from diffusing, so that not only accuracy in measurement increases, but also the loss of the condensed droplets decreases. Nitrogen gas fed from the nitrogen gas cylinder 17, purified with the gas purification filter 16, is introduced as the curtain gas at a specified flow rate controlled by the curtain gas flow meter 10.

In the laser layer formation chamber 60 in the holder 34 in the optical detector 5, the laser beam scattered by the condensed droplets passing through the thin layer of laser beam formed by the laser diode 36 is detected by the light receiving diode 37. The signal detected by the light receiving diode 37 is converted into a pulse signal, which is transmitted to the computer 19 via the interface 18.

Thereafter, the computer 19 computes the number of the nanometer-sized fine particles born in the aerosol from the data from the carrier gas flow meter 6 and the excess gas flow meter 12 (the flow rates of the carrier gas), from the flow rate of the aerosol introduced via the aerosol inlet tube 8, and from the pulse signal showing the number of the condensed droplets counted with the light receiving diode 37 in the optical detector 5. Further, the computer 19 analyzes the data from the carrier gas flow meter 6 and the excess gas flow meter 12, as well as the data from the pressure regulator/indicator 43, and controls, according to the data analyzed, the vacuum pump 14 to create any predetermined pressure condition (e.g., any pressure condition selected from the range between 133.3 kPa and 1.33 kPa).

In the laser layer formation chamber 60 in the holder 34 in the optical detector 5, the condensed droplets that have passed through the thin layer of laser beam formed by the laser diode 36, the carrier gas, the gaseous components of the aerosol, and the curtain gas are discharged from the excess gas discharge hole 41 in the upper end of the holder 34 in the optical detector 5. After passing through the excess gas discharge pipe 17, they pass through the discharge gas purification filter 13, with which foreign matter such as the condensed droplets are removed, and are then discharged to the outside by means of the vacuum pump 14.

According to this embodiment, after contact-mixing, in the mixer 3, the saturated vapor of a high-boiling-point solvent produced by the saturator 2, a component of the condensed nucleus detector 1, with nanometer-sized fine gas-born particles, condensed droplets of the saturated vapor whose nuclii are the fine particles are produced by the condenser 4 by heterogeneous nucleation, and the number of the condensed droplets per unit of time is counted with the optical detector 5 and is output as a pulse signal. The computer 19 computes the number density of the nanometer-sized fine particles born in the aerosol, from the pulse signal and the flow rates of the gases controlled by the flow meters (the carrier gas flow meter 6, the excess gas flow meter 12, and the curtain gas flow meter 10) that are transmitted to the computer 19 via the interface 18. In this manner, the number density of nanometer-sized fine particles born in a gas phase can be accurately measured under wide-ranging pressure conditions from pressurized conditions to low-pressure conditions (pressure conditions ranging from 133.3 kPa to 1.33 kPa).

In particular, according to the present invention, the entry-side part of the internal space 64 of the container 63 of the mixer 3 is the truncated-cone-shaped, diameter-decreasing part 27 whose cross section is circular and whose diameter gradually decreases so that the diameter on the lower end side is greater than the diameter on the narrowest passage 26 side, and the part of the internal space 64 above the narrowest passage 26 (the part on the exit side) is the reverse-truncated-cone-shaped, diameter-increasing part 28 whose cross section is circular and whose diameter gradually increases so that the diameter on the narrowest passage 26 side is smaller than the diameter on the upper end side. It is therefore possible to improve the efficiency of contact mixing of the saturated vapor of the high-boiling-point solvent with the fine particles born in the aerosol. Consequently, it becomes possible to attain reduction of losses because of the acceleration of heterogeneous nucleation and stabilize the background because of the suppression of homogeneous nucleation, which lead to a great improvement in accuracy in measurement. Further, a curtain gas, fed via the curtain gas supply pipe 11, is introduced into the laser layer formation chamber 60 from the annular curtain-gas-forming nozzle 38 surrounding the outer periphery of the nozzle 59 in the holder 34, so that the condensed droplets introduced from the nozzle 59 do not disperse in a lateral direction relative to the direction of their flow. Since the condensed droplets introduced from the nozzle 59 are thus prevented from diffusing, not only accuracy in measurement increases, but also the loss of the condensed droplets decreases.

Further, according to this embodiment, the gas flow meters (the carrier gas flow meter 6, the excess gas flow meter 12, and the curtain gas flow meter 12), the temperature regulators/indicators (the saturator temperature regulator/indicator 22 and the condenser temperature regulator/indicator 32), the pressure regulator/indicator (the pressure regulator/indicator 43), the optical devices (the laser diode 36 and the light receiving diode 37), the gas discharging mechanism (the vacuum pump 14), the interface 18, the computer 19, and so forth are assembled integrally with the condensed nucleus detector 1 (the saturator 2, the mixer 3, the condenser 4, and the optical detector 5). There can therefore be obtained a smaller-sized instrument having improved operating characteristics.

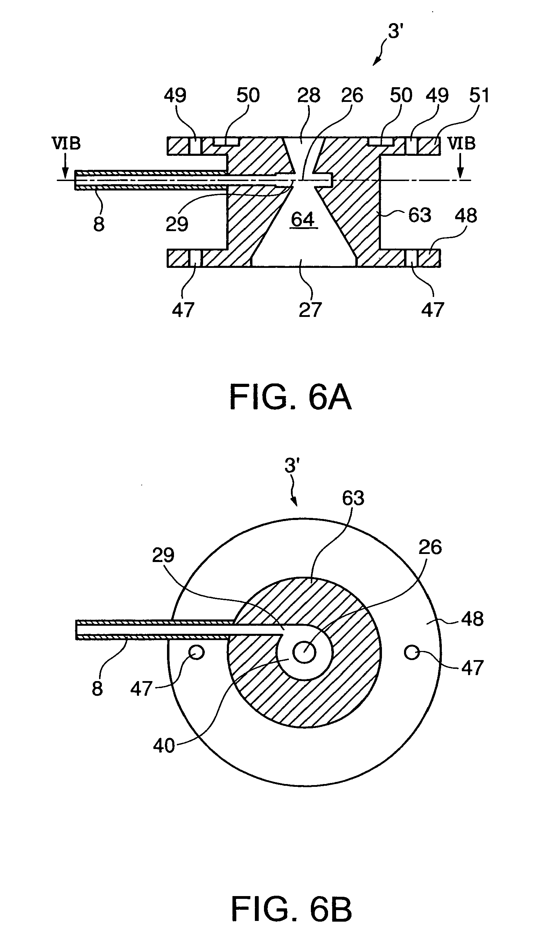

In the mixer 3, a component of the condensed nucleus detector 1, in the aforementioned embodiment, the aerosol inlet 29 communicating with the aerosol inlet tube 8 is positioned at the narrowest passage 26 in the internal space 64 of the container 63, as shown in Figs. 3A and 3B. However, as in a mixer 3' shown in Figs. 6A and 6B, an annular passage 40 may be made so that it surrounds the outer periphery of the narrowest passage 26 having a circular cross section, and the aerosol inlet 29 may be positioned at the annular passage 40 so that aerosol is introduced into the mixer 3' along the tangent line to the annular passage 40.

If the annular passage 40 is so made, aerosol containing fine particles, an object of measurement, fed via the aerosol inlet tube 8 connected to the mixer 3, is introduced into the mixer 3 from the aerosol inlet 29 situated at the annular passage 40 in the internal space 64 of the container 63 of the mixer 3, along the tangent line to the annular passage 40, and is brought into contact with and mixed with the saturated vapor of a high-boiling-point solvent fed to the mixer 3 from the saturator 2 together with a carrier gas (gas mixture). In this step, the aerosol introduced into the mixer 3 via the aerosol inlet tube 8 and the aerosol inlet 29 flows into the mixer 3 along the tangent line to the annular passage 40 surrounding the outer periphery of the narrowest passage 26, so that a whirl flow occurs at the narrowest passage 26. It is therefore possible to improve the efficiency of contact mixing of the aerosol with the gas mixture.

## Claims

1. A fine-particle counter for determining the number density of fine particles born in a gas phase, comprising:
a saturator for heating a high-boiling-point solvent to produce saturated vapor of the high-boiling-point solvent,
a mixer for mixing the saturated vapor of the high-boiling-point solvent produced by the saturator with nanometer-sized fine gas-born particles introduced into the mixer via an aerosol inlet tube,
a condenser for forming, by heterogeneous nucleation, condensed droplets whose nuclii are the fine particles mixed by the mixer, and
an optical detector for counting, by an optical method, the number of the condensed droplets formed by the condenser,
a carrier gas supply pipe for supplying a carrier gas being connected to the saturator, an excess gas discharge pipe through which the carrier gas to be discharged along with the condensed droplets is discharged being connected to the optical detector,
each one of the saturator, the mixer, the condenser and the optical detector having an internal space through which the carrier gas, which is supplied via the carrier gas supply pipe connected to the saturator and is discharged via the excess gas discharge pipe connected to the optical detector, passes together with the saturated vapor, with the fine particles, or with the condensed droplets,
the internal space of the mixer having a narrowest passage having a circular cross section, situated in the center between one end of the mixer from which the carrier gas enters and the other end of the mixer from which the carrier gas exits, a truncated-cone-shaped part whose cross section is circular and whose diameter gradually decreases so that the diameter on the one end side is greater than the diameter on the narrowest passage side, and a reverse-truncated-cone-shaped part whose cross section is circular and whose diameter gradually increases so that the diameter on the narrowest passage side is smaller than the diameter on the other end side, an aerosol inlet communicating with the aerosol inlet tube being positioned at the narrowest passage.

2. The fine-particle counter according to claim 1, wherein the internal space of the mixer further has an annular passage surrounding the outer periphery of the narrowest passage having a circular cross section, and the aerosol inlet is positioned at the annular passage so that the aerosol is introduced into the internal space of the mixer along the tangent line to the annular passage.

3. The fine-particle counter according to claim 1 or 2, wherein the optical detector has a holder composed of a laser layer formation chamber, an internal space, in which a thin layer of laser beam is formed so that the thin layer of laser beam blocks the flow of the condensed droplets introduced into the optical detector from the condenser together with the carrier gas, and a nozzle through which the condensed droplets are introduced into the laser layer formation chamber together with the carrier gas, and a curtain gas supply pipe through which a curtain gas is supplied to the laser layer formation chamber in the holder, and an annular curtain-gas-forming nozzle communicating with the curtain gas supply pipe is situated in the vicinity of the outer periphery of the nozzle in the holder so that the curtain gas introduced into the laser layer formation chamber via the curtain gas supply pipe and the curtain-gas-forming nozzle prevents the condensed droplets introduced from the nozzle from dispersing in a lateral direction relative to the direction of their flow.

4. The fine-particle counter according to any of claims 1 to 3, further comprising a drain discharge pipe for returning, to the saturator, the condensate of the high-boiling-point solvent produced in the condenser.

5. The fine-particle counter according to any of claims 1 to 4, wherein the internal space of the condenser has a truncated-cone-shaped part whose cross section is circular and whose diameter gradually decreases so that the diameter at one end of the condenser from which the carrier gas enters is greater than the diameter at the other end of the condenser from which the carrier gas exits.

6. The fine-particle counter according to any of claims 1 to 5, further comprising a carrier gas flow meter placed in the carrier gas supply pipe, an excess gas flow meter placed in the excess gas discharge pipe, and a computer for computing the number density of the nanometer-sized fine particles born in the aerosol from the data from the carrier gas flow meter and the excess gas flow meter and from a pulse signal showing the number of the condensed droplets counted with the optical detector.

7. The fine-particle counter according to claim 6, further comprising a gas discharging mechanism for discharging the excess gas via the excess gas discharge pipe, a pressure sensor placed in a pressure-measuring tube communicating with the internal space of the condenser, and a pressure regulator/indicator for regulating and indicating the internal pressure of the condenser measured with the pressure sensor,
the computer analyzing the data from the carrier gas flow meter and the excess gas flow meter, as well as the data from the pressure regulator/indicator, and controlling the gas discharging mechanism according to the data analyzed.
